(19) Europäisches Patentamt
European Patent Office
Office européen des brevets

(11) **EP 3 557 489 A1**

(12) **EUROPEAN PATENT APPLICATION**

(43) Date of publication:
**23.10.2019 Bulletin 2019/43**

(51) Int Cl.:
**G06N 3/08** (2006.01)    **G06N 3/00** (2006.01)

(21) Application number: **18168160.2**

(22) Date of filing: **19.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Mobility GmbH**
**81739 München (DE)**

(72) Inventors:
• **Aufderheide, Helge**
  **80634 München (DE)**
• **Sivalingam, Udhayaraj**
  **81379 München (DE)**
• **Taylor, Michael**
  **81929 München (DE)**

(54) **ENERGY OPTIMISATION IN OPERATION OF A RAIL VEHICLE**

(57)    The invention relates to a method for energy optimisation in operation of a rail vehicle (2). In order to facilitate energy optimisation in operation of the rail vehicle (2), while complying with one or several boundary conditions to be observed, it is suggested that a set of status data is transmitted to a computing unit (16), an action to be applied to an electric energy system (8) of the rail vehicle (2) is selected by the computing unit (16) by means of a machine learning method and the selected action is applied to the electric energy system (8), wherein the action is selected by the computing unit (16) using the set of status data as well as taking into account an energy optimisation criterion and taking into account one or several boundary conditions to be observed. Furthermore, the invention relates to a computing unit (16) for energy optimisation in operation of a rail vehicle (2).

EP 3 557 489 A1

## Description

The present invention relates to a method for energy optimisation in operation of a rail vehicle. Furthermore, the invention relates to a computing unit for energy optimisation in operation of a rail vehicle.

Modern rail vehicles are equipped with an electric energy system, typically comprising several components which may consume and/or generate electric energy.

In operation of a rail vehicle, it is typically necessary that one or several boundary conditions to be observed are complied with. For instance, it may be necessary to comply with a given schedule, to comply with temperature limits within a passenger compartment and/or to comply with pressure limits in a compressed air system of the rail vehicle.

Often, it is not necessary to operate the respective component continuously at its nominal power in order to observe the boundary condition(s). Instead, the respective component may, at least temporarily, be switched off or operated at a lower power.

In general, railway companies wish to minimise energy consumption of the electric energy system and/or to maximise energy generation of the electric energy system, provided that the boundary condition(s) to be observed can be complied with.

The amount of energy consumed by the electric energy system as well as the amount of energy generated by the electric energy system depends on how the components of the electric energy system are operated.

An objective of the present invention is to facilitate energy optimisation in operation of a rail vehicle, while complying with one or several boundary conditions to be observed.

This objective is achieved, according to the invention, by a method with the features of claim 1 as well as by a computing unit with the features of claim 15.

In the method according to the invention a set of status data is transmitted to a computing unit, an action to be applied to an electric energy system of the rail vehicle is selected by the computing unit by means of a machine learning method and the selected action is applied to the electric energy system, wherein the action is selected by the computing unit using the set of status data as well as taking into account an energy optimisation criterion and taking into account one or several boundary conditions to be observed.

The computing unit according to the invention is configured to receive a set of status data and is further configured to select an action to be applied to an electric energy system of the rail vehicle by means of a machine learning method, wherein the computing unit is configured to select the action using the set of status data as well as taking into account an energy optimisation criterion and taking into account one or several boundary conditions to be observed.

Preferred embodiments of the invention are subject of the dependent claims and of the following description.

By taking into account the energy optimisation criterion, the computing unit may select the action to be applied to the electric energy system under the aspect of compliance or least approximate compliance with the energy optimisation criterion.

An advantage of employing a machine learning method to select the action to be applied to the electric energy system is that it is not required to implement situation-related rules for selecting the action to be applied to the electric energy system. By employing a machine learning method to select the action to be applied to the electric energy system, the computing unit may, without specific rules, select an action which facilitates energy optimisation in the respective situation. Through (repeated) training, the computing unit by itself may improve/optimise its strategy for selecting the action to be applied to the electric energy system.

Moreover, using a machine learning method to select the action to be applied to the electric energy system enables the computing unit to identify complex correlations between the status data, the action to be applied to the electric energy system, the boundary condition(s) to be observed and/or the energy optimisation criterion. The computing unit may select the action to be applied to the electric energy system for energy optimisation on the basis of previously learned correlations between the status data, the action to be applied to the electric energy system, the boundary condition(s) to be observed and/or the energy optimisation criterion. Particularly, the computing unit may identity correlations which can be so complex that it is (too) difficult for humans to identify these correlations and it is, thus, (too) difficult to implement appropriate specific rules for selecting the action to be applied to the electric energy system. Therefore, by employing a machine learning method to select the action to be applied to the electric energy system, the computing unit may select an action which is more promising with regard to energy optimisation, as compared with selecting an action on the basis of specific rules.

Whether an action which, in principle, is applicable to the electric energy system is realisable and/or permissible, is dependent on the specific situation. By transmitting the status data to the computing unit and using the set of status data in selecting the action to be applied to the electric energy system, the action to be applied to the electric energy system can be appropriately selected for the respective situation.

Furthermore, taking into account the boundary condition(s) to be observed in selecting the action to be applied to the electric energy system facilitates compliance with the boundary condition(s) within the scope of permissible limits.

Taking into account both, the boundary condition(s) to be observed and the energy optimisation criterion, allows the computing unit to select an action to be applied to the electric energy system which enables compliance or approximate compliance with the boundary condition(s) on the one hand and energy optimisation, particularly minimisation of energy consumption and/or maximisation of energy generation of the electric energy system, on the other hand.

A rail vehicle within the meaning of the present invention may, for instance, be a railcar (i.e. a self-propelled rail vehicle designed to transport passengers), a locomotive or a train comprising at least one locomotive or railcar. Moreover, a rail vehicle within the meaning of the present invention may be single wagon without an own propelling system, such as a wagon of an airport train.

Preferably, the rail vehicle is an electrically driven rail vehicle. The rail vehicle may comprise, inter alia, one or several electric traction motors.

Said computing unit can be a component of the rail vehicle. In particular, the computing unit can be arranged in the interior of the rail vehicle.

Alternatively, the computing unit can be a separate device which, for instance, can be arranged in a control centre. In this case the computing unit can be connected with the rail vehicle, particularly with a control device of the rail vehicle, via radio communication.

Expediently, the computing unit comprises a processor and a data storage. Further it is expedient, if a software agent is stored in the data storage and is executed on the processor of the computing unit. Advantageously, the software agent is a self-learning software agent.

It is preferred, if the software agent enables the computing unit to execute the above-mentioned process steps. In other words, the computing unit is preferentially configured to execute the above-mentioned process steps by means of the software agent.

Expediently, the electric energy system is supplied with electric energy via a power supply system. Said power supply system can be an external power supply system which, for instance, may comprise an overhead line or a third rail. Alternatively, said power supply system can be an internal power supply system (i.e. a power supply system of the rail vehicle). In the latter case the power supply system can, for example, be an electric generator (particularly driven by a diesel engine) or a storage unit for storing electric energy. Moreover, the rail vehicle can be supplied with electric energy via both, an external and an internal power supply system. Advantageously, the electric energy system can feed (back) electric energy into the power supply system(s).

The action selected by the computing unit can, inter alia, be an action which allows for optimising the performance of the power supply system, particularly avoiding a drop in voltage in the power supply system. Moreover, the action selected by the computing unit can, for instance, be an action which - in case the rail vehicle needs to be decelerated - allows for minimising the usage of a non-regenerative brake of the rail vehicle so that only a little amount of energy is converted into heat (and rather allows for an increased usage of a regenerative brake of the rail vehicle).

Furthermore, the electric energy system can comprise several components, such as one or several electric traction motors, an air conditioning device, a compressed air device and/or a lighting system. Preferentially, these components are operable independently of one another. Said components may consume and/or generate electric energy. Advantageously, electric energy generated by one or several of the components is fed (back) into the power supply system. The action selected by the computing unit may be an action which is to be applied to one or several of the components. Expediently, the action is applied to the respective component(s). For the purpose of energy optimisation, the energy consumption of the components may be traded off against each other and/or against power supply capabilities.

In a preferred embodiment of the invention, the energy optimisation criterion is or relates to an energy balance of the electric energy system. In this manner, the action can be selected by the computing unit with the objective to optimise/maximise the energy balance of the electric energy system, while complying or approximately complying with the boundary condition(s) to be observed.

The expression "energy balance of the electric energy system" is to be understood as a sum of energy consumption of some or all electric energy system components and energy generation of some or all electric energy system components, wherein the energy consumption is added up as a negative value and the energy generation is added up as a positive value.

Preferably, the action is selected by the computing unit from a list of possible actions which are applicable to the electric energy system. Said list of actions may, for instance, be stored in the data storage of the computing unit.

For example, the list of possible actions may comprise turning on one or several components of the electric energy system, turning off one or several components of the electric energy system and/or modifying one or several setpoints of one or several components of the electric energy system. Such setpoint can, inter alia, be an engine speed setpoint or a temperature setpoint, as for instance a setpoint for a temperature in a passenger compartment of the rail vehicle or a setpoint for a temperature of a vehicle component which is to be cooled.

The set of status data which is transmitted to the computing unit can, for example, comprise vehicle status data, ambient status data and/or infrastructure status data.

Within the meaning of the present invention, the expression "vehicle status data" is to be understood as status data relating to a status of one or several state variables of the rail vehicle, such its position, its velocity, its break status and/or an electrical quantity (voltage and/or current) of a possible power transformer of the rail vehicle. The expression "ambient status data" is to be understood as status data relating to a status of one or several state variables in the environment of the rail vehicle, such as ambient temperature. Moreover, the expression "infrastructure status data" is to be understood as status data relating to a status of one or several state variables of one or several infrastructure facilities, as for instance positions of railway switches, states of railway signals and/or voltage of an external power supply supplying the rail vehicle with electric energy.

In a possible embodiment of the invention, the selected action is put out via an output device, such as a display, and execution of said action is initiated by a driver of the rail vehicle via an operating element, such as a button or a key. Alternately, execution of the selected action can be initiated automatically by the computing unit, i.e. without authorisation from the driver (and possibly without notifying the driver). In the latter case, the computing unit may automatically generate a control signal for carrying out the selected action and transmit the control signal to the respective component(s).

The boundary condition(s) to be observed can, inter alia, relate to an interior temperature of the rail vehicle, such as a temperature in a passenger compartment of the rail vehicle, to a temperature of a vehicle component which is to be cooled and/or to a schedule. A boundary condition to be observed which relates to a temperature may, for example, define how much a temperature may deviate from a predetermined temperature value, particularly from a predetermined upper temperature limit and/or a predetermined lower temperature limit. Analogously, a boundary condition to be observed which relates to a schedule may, for instance, define how much the rail vehicle's arrival time at a destination may deviate from a predetermined arrival time according to a schedule.

Advantageously, said machine learning method is a supervised learning method. Particularly advantageously, said machine learning method is a reinforcement learning method. Reinforcement learning methods have proved themselves especially in learning/identifying very complex correlations in training data. Thus, a reinforcement learning method may, inter alia, enable the computing unit to learn/identify particularly complex correlations between the status data, the action to be applied to the electric energy system, the boundary condition(s) to be observed and/or the energy optimisation criterion. Apart from learning correlations, a reinforcement learning method may, for instance, learn complex patterns in data and/or learn sequences of actions to be applied to the electric energy system for energy optimisation. Another advantage of reinforcement learning methods is their distinct property to "keep learning".

Said machine learning method can comprise calculating a reward function on the basis of several input parameters. Expediently, these input parameters are associated with the energy optimisation criterion and/or the boundary condition(s) to be observed. Particularly, the reward function can be a sum of several summands, wherein at least one summand is associated with the energy optimisation criterion and at least one further summand is associated with the boundary condition(s) to be observed.

Advantageously, the reward function is used by the computing unit to assess the action to be applied to the electric energy system, particularly with regard to compliance with the energy optimisation criterion and/or the boundary condition(s) to be observed. Furthermore, the calculated reward function can be used by the computing unit at a later stage in selecting a future action to be applied to the electric energy system.

The reward function can be calculated after applying the selected action to the electric energy system, particularly after expiration of a predetermined time span or after traveling a predetermined driving distance. In this manner, the difference between the actual amount of energy that has been consumed and/or generated by the electric energy system after application of the selected action and the expected amount of consumed and/or generated energy can be taken into account when calculating the reward function. Alternately, the reward function can be calculated instantaneously upon selection of the action to be applied to the electric energy system.

Further, it is advantageous, if said machine learning method employs an artificial neural network, particularly a deep neural network. A "deep neural network" within the meaning of the present invention is to be understood as an artificial neural network which comprises, apart from an input layer and an output layer, at least one hidden layer, preferentially several hidden layers. A characteristic of artificial neural networks is the high parallelism in information processing, making artificial neural networks especially suitable for machine learning methods.

Preferably, the set of status data is used as input data for the artificial neural network. Expediently, the action is selected by the computing unit on the basis of output data generated by the artificial neural network.

The output data generated by the artificial neural network may, for instance, comprise action probabilities, i.e. probabilities of taking different actions (as a function of the status data). Moreover, the output data generated by the artificial neural network may comprise expected rewards. An "expected reward" within the meaning of the present invention is a reward which is to be expected for the respective action.

In a preferred embodiment of the invention, said machine learning method employs an asynchronous advantage actor-critic algorithm (also referred to as A3C algorithm), particularly for training the aforementioned artificial neural network. Such an algorithm facilitates training of an artificial neural network in a stable manner and is also conceptually relatively simple.

Alternatively, the machine learning method may employ another temporal difference learning algorithm, such as Q-Learning or SARSA, particularly for the purpose of training the artificial neural network.

Data which is used to train the artificial neural network can be data which has been acquired during previous operation of the rail vehicle and/or during operation of one or several other rail vehicles.

The foregoing description of preferred embodiments of the invention contains numerous features which may be present in combination with one another in the dependent claims. Expediently, these features can also be considered individually and be combined with one another to achieve further suitable combinations. More particularly, these features can be combined with the method and the computing unit according to the respective independent claim individually as well as in any suitable combination. Furthermore, features mentioned in connection with the method can be considered as features of the computing unit and vice versa.

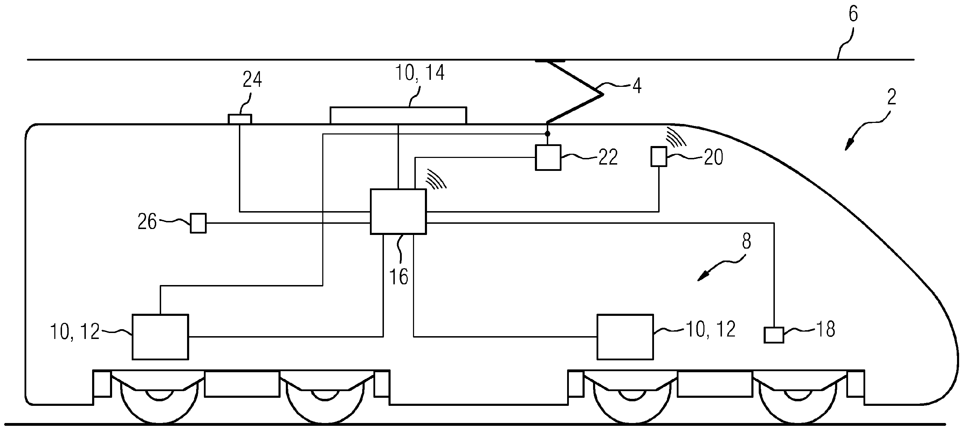

The above-described characteristics, features and advantages of the invention and the manner in which they are achieved can be understood more clearly in connection with the following description of an exemplary embodiment of the invention which will be explained with reference to the appended drawing. The exemplary embodiment is intended to illustrate the invention, but is not supposed to restrict the scope of the invention to combinations of features and/or to functions described therein. Furthermore, suitable features of the exemplary embodiment can also be explicitly considered in isolation and/or be combined with any of the appended claims.

The drawing shows schematically an electrically driven rail vehicle 2 for passenger transport. Inter alia, the rail vehicle 2 comprises a current collector 4 which is in contact with an overhead line 6.

Furthermore, the rail vehicle 2 is equipped with an electric energy system 8 comprising several components 10, each of which can consume and/or generate electric energy, wherein the components 10 are operable independently of one another. The electric energy system 8 is supplied with electric energy from the overhead line 6.

In the present exemplary embodiment, two of these components 10 are traction motors 12 for driving the rail vehicle 2. Both traction motors 12 can be operated in generator mode and, thus, be used for regenerative braking. Braking energy generated by the traction motors 12 can be used to power other components 10 of the electric energy system 8 and/or can be fed (back) into the overhead line 6.

Another component 10 of the electric energy system 8, according to the present exemplary embodiment, is an air conditioning device 14 for climate control in a passenger compartment of the rail vehicle 2.

Moreover, the rail vehicle 2 is equipped with a computing unit 16 for energy optimisation in operation of the rail vehicle 2. The computing unit 16 is connected to the components 10 of the electric energy system 8 and is also configured to control the components 10 of the electric energy system 8 by sending control signals to the components 10. Further, the computing unit 16 is configured to receive radio signals from infrastructure facilities, such as railway switches and/or railway signals.

In addition, the rail vehicle 2 comprises a velocity sensor 18 for measuring the rail vehicle's velocity, a GPS sensor 20 for determining the rail vehicle's position and a voltmeter 22 for measuring the overhead line's supply voltage. Besides, the rail vehicle 2 comprises a first temperature sensor 24 for measuring an outside temperature and a second temperature sensor 26 for measuring the passenger compartment's temperature. Each of the aforementioned sensors 18-26 is connected to the computing unit 16.

In operation of the rail vehicle 2, a set of status data is transmitted to the computing unit 16. The set of status data comprises data acquired by the aforementioned sensors 18-26, i.e. data relating to the rail vehicle's velocity, the vehicle's position, the overhead line's supply voltage, the outside temperature and the passenger compartment's temperature. Also, the set of status data comprises infrastructure status data, such as positions of railway switches and/or states of railway signals, transmitted from infrastructure facilities to the computing unit 16 via radio communication.

For the purpose of energy optimisation, the computing unit 16 selects by means of a machine learning method an action to be applied to the electric energy system 8 from a list of possible actions which are applicable to the electric energy system 8. Said list of actions can, for instance, comprise actions such as turning on one or several components 10 of the electric energy system 8, turning off one or several components 10 of the electric energy system 8 and/or modifying one or several setpoints of one or several components 10 of the electric energy system 8.

In selecting the action to be applied to the electric energy system 8, the computing unit 16 uses the set of status data and takes into account an energy optimisation criterion as well as several boundary conditions to be observed.

In the present exemplary embodiment, the energy optimisation criterion is an energy balance of the electric energy system 8, i.e. a sum of energy consumption of the components 10 of the electric energy system 8 and energy generation of the components 10 of the electric energy system 8.

The boundary conditions to be observed relate to the passenger compartment's temperature and to a schedule. Particularly, one of the boundary conditions stipulates that the passenger compartment's temperature shall be within a predetermined temperature interval and another of the boundary conditions stipulates that the rail vehicle's arrival time at its next destination shall not differ from the schedule by more than an admissible time span, as for instance 2 minutes. In principle, there can also be further boundary conditions to be observed. For reasons of simplicity, the present exemplary embodiment only addresses the aforementioned boundary conditions.

The action selected by the computing unit 16 is an action which is to be applied to one or several of the components 10 of the electric energy system 8. For the purpose of energy optimisation, said action is applied to the respective component(s) 10. Execution of the action is initiated by the computing unit 16 in that the computing unit 16 transmits one or several control signals for carrying out the selected action to the respective component(s) 10 of the electric energy system 8.

The computing unit 16 controls the electric energy system 8 in such a way that the energy balance of the electric energy system 8 is maximised, while complying with the aforementioned boundary conditions. Preferably, the electric energy system 8 is controlled in such a way that the rail vehicle 2 is decelerated as little as possible by non-regenerative brakes until it reaches the next railway station in order to minimise energy losses due to non-regenerative braking.

Aforementioned machine learning method is a deep reinforcement learning method (i.e. a reinforcement learning method which employs a deep neural network), wherein the machine learning method comprises calculating a reward function.

The machine learning method encompasses the following steps: a) The set of status data is passed to the neural network as input data. b) The neural network puts out action probabilities and expected rewards as output data. c) The action to be applied to the electric energy system 8 is selected on the basis of this output data, i.e. on the basis of the action probabilities and the expected rewards. d) The selected action is applied to the electric energy system 8. e) The reward function is calculated, particularly after the rail vehicle has travelled a predetermined driving distance, and the calculated reward function is fed back to the neural network. These steps are repeated until the reward function fulfils a convergence condition.

In the present exemplary embodiment, the reward function R can be defined as

$$R = \alpha \cdot R_1 + \beta \cdot R_2 + \gamma \cdot R_3 + \delta \cdot R_4$$

wherein $\alpha$, $\beta$, $\gamma$ and $\delta$ are weighting factors, $R_1$ is a punctuality reward, $R_2$ is an energy generation reward, $R_3$ is an energy consumption reward and $R_4$ is a temperature compliance reward.

The punctuality reward $R_1$ can, for instance, be defined as

$$R_1 = t_a(A,B) - t_c(A,B)$$

wherein $t_c(A, B)$ is the time consumed by the rail vehicle 2 to cover the distance between starting location A and ending location B, if the action(s) selected by the computing unit 16 is/are applied to the electric energy system

8, and $t_a(A, B)$ is the pre-allocated time to cover said distance.

For example, the energy generation reward $R_2$ can be defined as

$$R_2 = G_a(A,B) - (G_d(A,B) + G_t)$$

wherein $G_a(A, B)$ is the amount of energy generated by the electric energy system 8 on the journey from starting location A to ending location B, if the action(s) selected by the computing unit 16 is/are applied to the electric energy system 8. $G_d(A, B)$ is an average amount of energy generated by the electric energy system 8 on past journeys from starting location A to ending location B, when the driver controlled the electric energy system 8, and $G_t$ (having a value $\geq 0$) is an energy generation threshold.

The energy consumption reward $R_3$ can, e.g., be defined as

$$R_3 = (C_d(A,B) - C_t) - C_a(A,B)$$

wherein $C_a(A, B)$ is the amount of energy consumed by the electric energy system 8 on the journey from starting location A to ending location B, if the action(s) selected by the computing unit 16 is/are applied to the electric energy system 8. $C_d(A, B)$ is an average amount of energy consumed by the electric energy system 8 on past journeys from starting location A to ending location B, when the driver controlled the electric energy system 8, and $C_t$ (having a value $\geq 0$) is an energy consumption threshold.

The temperature compliance reward $R_4$ can, for instance, be defined as

$$R_4 = - \left| T_a(A,B) - T_s \right|$$

wherein $T_a(A, B)$ is the temporal average of the passenger compartment's temperature on the journey from starting location A to ending location B, if the action(s) selected by the computing unit 16 is/are applied to the electric energy system 8, and $T_s$ is a temperature setpoint for the passenger compartment's temperature (depending on the outside temperature).

In the present embodiment, the computing unit 16 controls the components 10 of the electric energy systems 8 automatically, i.e. without authorisation from the driver. Alternately, the rail vehicle 2 could comprise an output device, such as display. In the latter case, the action selected by the computing unit 16 could be put out via the output device as a suggestion and, if the driver follows the suggestion, said action could be initiated by the driver of the rail vehicle 2 via an operating element.

While specific embodiments of the invention have been described in detail, those with ordinary skill in the art will appreciate that various modifications and alternatives to those details could be developed in light of the overall teachings of the disclosure. Accordingly, the particular embodiments disclosed are meant to be illustrative only and should not be construed as limiting the scope of the appended claims.

**Claims**

1. Method for energy optimisation in operation of a rail vehicle (2), in which a set of status data is transmitted to a computing unit (16), an action to be applied to an electric energy system (8) of the rail vehicle (2) is selected by the computing unit (16) by means of a machine learning method and the selected action is applied to the electric energy system (8), wherein the action is selected by the computing unit (16) using the set of status data as well as taking into account an energy optimisation criterion and taking into account one or several boundary conditions to be observed.

2. Method according to claim 1, **characterised in that** the electric energy system (8) comprises several components (10) which, preferentially, are operable independently of one another, wherein the action selected by the computing unit (16) is an action which is to be applied to one or several of the components (10) and wherein the action is applied to the respective component(s) (10).

3. Method according to claim 1 or 2, **characterised in that** the energy optimisation criterion is or relates to an energy balance of the electric energy system (8) of the rail vehicle (2).

4. Method according to any of the preceding claims, **characterised in that** the action is selected by the computing unit (16) from a list of possible actions which are applicable to the electric energy system (8).

5. Method according to claim 4, **characterised in that** the list of possible actions comprises turning on one or several components (10) of the electric energy system (8), turning off one or several components (10) of the electric energy system (8) and/or modifying one or several setpoints of one or several components (10) of the electric energy system (8).

6. Method according to any of the preceding claims, **characterised in that** the set of status data which is transmitted to the computing unit (16) comprises vehicle status data, ambient status data and/or infrastructure status data.

7. Method according to any of the preceding claims, **characterised in that** the boundary condition(s) to be observed relates/relate to an interior temperature of the rail vehicle (2), to a temperature of a vehicle component which is to be cooled and/or to a schedule.

8. Method according to any of the preceding claims, **characterised in that** said machine learning method is a supervised learning method.

9. Method according to any of the preceding claims, **characterised in that** said machine learning method is a reinforcement learning method.

10. Method according to any of the preceding claims, **characterised in that** said machine learning method comprises calculating a reward function on the basis of several input parameters, wherein these input parameters are associated with the energy optimisation criterion and/or the boundary condition(s) to be observed.

11. Method according to claim 10, **characterised in that** the reward function is calculated after applying the selected action to the electric energy system (8), particularly after expiration of a predetermined time span or after traveling a predetermined driving distance.

12. Method according to any of the preceding claims, **characterised in that** said machine learning method employs an artificial neural network, particularly a deep neural network, wherein the set of status data is used as input data for the artificial neural network and wherein the action is selected by the computing unit (16) on the basis of output data generated by the artificial neural network.

13. Method according to claim 12, **characterised in that** the output data generated by the artificial neural network comprises action probabilities and/or expected rewards.

14. Method according to any of the preceding claims, **characterised in that** said machine learning method employs an asynchronous advantage actor-critic algorithm.

15. Computing unit (16) for energy optimisation in operation of a rail vehicle (2), configured to receive a set of status data and further configured to select an action to be applied to an electric energy system (8) of the rail vehicle (2) by means of a machine learning method, wherein the computing unit (16) is configured to select the action using the set of status data as well as taking into account an energy optimisation criterion and taking into account one or several boundary conditions to be observed.

EP 3 557 489 A1

Europäisches
Patentamt

European
Patent Office

Office européen
des brevets

## EUROPEAN SEARCH REPORT

Application Number

EP 18 16 8160

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI ZHU ET AL: "Communication-Based Train Control System Performance Optimization Using Deep Reinforcement Learning", IEEE TRANSACTIONS ON VEHICULAR TECHNOLOGY., vol. 66, no. 12, December 2017 (2017-12), pages 10705-10717, XP055515807, US ISSN: 0018-9545, DOI: 10.1109/TVT.2017.2724060 * abstract, Sections I, IV, VI, and VIII * | 1-15 | INV. G06N3/08 G06N3/00 |
| X | ZHOU RUI ET AL: "Optimal automatic train operation via deep reinforcement learning", 2018 TENTH INTERNATIONAL CONFERENCE ON ADVANCED COMPUTATIONAL INTELLIGENCE (ICACI), IEEE, 29 March 2018 (2018-03-29), pages 103-108, XP033356736, DOI: 10.1109/ICACI.2018.8377589 [retrieved on 2018-06-08] * Sections II, III, and V * | 1-15 | |
| A | YIN JIATENG ET AL: "Intelligent Train Operation Algorithms for Subway by Expert System and Reinforcement Learning", IEEE TRANSACTIONS ON INTELLIGENT TRANSPORTATION SYSTEMS, IEEE, PISCATAWAY, NJ, USA, vol. 15, no. 6, December 2014 (2014-12), pages 2561-2571, XP011565378, ISSN: 1524-9050, DOI: 10.1109/TITS.2014.2320757 [retrieved on 2014-11-25] * Section II-IV * -/-- | 1-15 | TECHNICAL FIELDS SEARCHED (IPC) G06N B60L B61L |

The present search report has been drawn up for all claims

| Place of search | Date of completion of the search | Examiner |
|---|---|---|
| The Hague | 19 October 2018 | Klasen, TJ |

EPO FORM 1503 03.82 (P04C01)

page 1 of 2

Europäisches
Patentamt

European
Patent Office

Office européen
des brevets

## EUROPEAN SEARCH REPORT

Application Number

EP 18 16 8160

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 106 842 925 A (UNIV TSINGHUA; CRRC INFORMATION TECH CO LTD; CRRC DALIAN LOCOMOTIVE RE) 13 June 2017 (2017-06-13) * paragraph [0009] - paragraph [0063] *<br>----- | 1-15 | |

TECHNICAL FIELDS
SEARCHED        (IPC)

The present search report has been drawn up for all claims

| Place of search | Date of completion of the search | Examiner |
|---|---|---|
| The Hague | 19 October 2018 | Klasen, TJ |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
........................................................................
& : member of the same patent family, corresponding
      document

EPO FORM 1503 03.82 (P04C01)

2

**ANNEX TO THE EUROPEAN SEARCH REPORT
ON EUROPEAN PATENT APPLICATION NO.**

EP 18 16 8160

This annex lists the patent family members relating to the patent documents cited in  the above-mentioned European search report.
The members are as contained in the European Patent Office EDP file on
The European Patent Office is in no way liable for these particulars which are merely given for the purpose of information.

19-10-2018

| Patent document cited in search report | Publication date | Patent family member(s) | Publication date |
|---|---|---|---|
| CN 106842925    A | 13-06-2017 | NONE | |

For more details about this annex : see Official Journal of the European Patent Office, No. 12/82